# EUROPÄISCHE PATENTANMELDUNG

(11) **EP 2 385 178 A2**
(43) Veröffentlichungstag der Anmeldung: **09.11.2011**
(21) Anmeldenummer: 11163936.5
(22) Anmeldetag: 27.04.2011
(51) Int. Cl.: E03F 1/00, E02B 11/00

(54) **Raumsparende Anordnung von Rigolenkomponenten und diese ermöglichende Rigolenkomponente**

(30) Priorität: 05.05.2010 DE 102010028607
(71) Anmelder: FRÄNKISCHE ROHRWERKE Gebr. Kirchner GmbH & Co. KG, 97486 Königsberg (DE)
(72) Erfinder: Adams, Dietmar, 01328, Dresden (DE); Kriese, Jens, 14621, Schönwalde-Glien (DE); Wilhelm, Jörg, 72070, Tübingen (DE); Czesch, Christian, 93055, Regensburg (DE); Haase, Reinhard, 32689, Kalletal-Hohenhausen (DE); Schütz, Michael, 97475, Zeil/Main (DE)
(74) Vertreter: Herzog, Markus

(57) **Zusammenfassung**

Eine Rigolenkomponente (10) umfasst eine Basiswand (12), eine Mehrzahl von Stützpfeilern (14, 16, 18), die von der Basiswand (12) abstehen, und wenigstens ein Strebenelement (26), das zwischen zwei einander in einer vorbestimmten Richtung (längs des Querrands 12b) benachbarten Stützpfeilern (14) vorgesehen ist und mit seinem einen Ende (26b) mit einem der Stützpfeiler (14) und mit seinem anderen Ende mit der Basiswand (12) oder/ und dem anderen Stützpfeiler (14) verbunden ist. Erfindungsgemäß ist der an das wenigstens eine Strebenelement (26) angrenzende und von der Basiswand (12) abgewandte Abschnitt (30a) des Raumbereichs (30) zwischen den beiden benachbarten Stützpfeilern (14), zwischen denen sich das Strebenelement (26) erstreckt, frei von weiteren Elementen der Rigolenkomponente (10). Dies ermöglicht eine raumsparende, ineinandergeschachtelte Anordnung zweier derartiger Rigolenkomponenten (10, 10'). Die Erfindung betrifft ferner eine derartige raumsparende Anordnung zweier derartiger Rigolenkomponenten (10, 10')

## Beschreibung

Die Erfindung befasst sich mit Rigolenkomponenten mit einer wenigstens teilweise wasserdurchlässig ausgebildeten Basiswand, einer Mehrzahl von Stützpfeilern, die von der Basiswand im Wesentlichen orthogonal abstehen, und wenigstens einer zumindest teilweise wasserdurchlässigen Wandung, die von der Basiswand im Wesentlichen orthogonal absteht, wobei zwischen zwei einander in einer vorbestimmten Richtung benachbart angeordneten Stützpfeilern ein Raumbereich vorgesehen ist, der in einem von der Basiswand entfernten Abschnitt eine Ausnehmung aufweist, welche sowohl von der Basiswand weg weisend über den gesamten Abstand zwischen den beiden Stützpfeilern offen ist als auch zur Innenseite und zur Außenseite der Rigolenkomponente hin offen ist.

Aus derartigen Rigolenkomponenten können, gegebenfalls unter Verwendung weiterer Hilfskomponenten, wie Zwischenplatten, Deckplatten, Geotextil und dergleichen, Rigolen zusammengesetzt werden, welche im Erdreich verlegt der Zwischenspeicherung oder/und Versickerung von Wasser, beispielsweise Regenwasser, dienen.

Rigolenkomponenten der eingangs genannten Art sind beispielsweise aus der EP 1 260 640 A1 bekannt. Bei diesen Rigolenkomponenten sind die am äußeren Rand der Basiswand angeordneten Stützpfeiler jeweils paarweise durch eine Gitterstruktur miteinander verbunden, die sich über die gesamte Höhe der Stützpfeiler erstreckt und von einer Mehrzahl von zwischen den Stützpfeilern schräg verlaufenden Strebenelementen gebildet ist. An zwei einander gegenüber liegenden Seiten ist jeweils lediglich zwischen einem Paar von Stützpfeilern keine derartige Gitterstruktur vorgesehen, um von diesen beiden Seiten Zugang zu einem in der Rigolenkomponente vorgesehenen Inspektionskanal zu gewähren. Die bekannte Rigolenkomponente ist als nach oben offener Korb ausgebildet, der zusammen mit einem weiteren, identisch ausgebildeten Korb zu einer Rigoleneinheit zusammengefügt werden kann, wobei in dem zusammengefügten Zustand die beiden offenen Korbseiten der Rigolenkomponenten aufeinander zu weisen.

Die bekannte Rigolenkomponente hat den Vorteil, dass ein sehr großer Anteil ihres Gesamtvolumens als Speichervolumen für Wasser, insbesondere Regenwasser, zur Verfügung steht. Mit anderen Worten nehmen die Basiswandung, die Stützpfeiler und die Gitterstrukturen nur einen geringen Anteil des Gesamtvolumens der Rigolenkomponente ein. Beim Transport der Rigolenkomponenten von der Herstellungsfabrik zur Baustelle wird dieser Vorteil jedoch zum Nachteil, da, insbesondere bei werkseitiger Vormontage zweier Rigolenkomponenten zu einer Rigoleneinheit, deren gesamtes Volumen im Laderaum eines Lastkraftwagens untergebracht werden muss, wobei das Gesamtgewicht der verladenen Rigolenkomponenten auch nicht im geringsten an das zulässige Lastgewicht des Lastkraftwagens heranreicht. Dies zieht hohe Transportkosten nach sich. Auch für die Lagerung der Rigolenkomponenten gelten analoge Überlegungen.

Es ist daher Aufgabe der vorliegenden Erfindung, aufzuzeigen, wie man bezogen auf das gleiche Speichervolumen für Wasser, insbesondere Regenwasser, eine größere Anzahl von Rigolenkomponenten in dem gleichen Lade- bzw. Lagervolumen unterbringen kann, als dies herkömmlich mit der vorbekannten Rigolenkomponente möglich war.

Diese Aufgabe wird erfindungsgemäß durch eine raumsparende Anordnung zweier, vorzugsweise identisch ausgebildeter, Rigolenkomponenten der eingangs genannten Art gelöst, gemäß welcher die eine Rigolenkomponente bezüglich der Orientierung der anderen Rigolenkomponente invertiert angeordnet ist, und die beiden Rigolenkomponenten jeweils mit wenigstens einem Stützpfeiler oder/und wenigstens einer zumindest teilweise wasserdurchlässigen Wandung in die Ausnehmung der jeweils anderen Rigolenkomponente eingreifen. Dabei wird unter "invertiertem Anordnen" die Drehung der Rigolenkomponente um 180° um eine zur Bodenwand parallel verlaufende Achse verstanden.

Auch wenn es im Stand der Technik rückschauend betrachtet bereits Rigolenkomponenten gegeben haben mag, die sich für eine solche raumsparende Anordnung geeignet hätten, ist es das Verdienst der Erfinder, die Möglichkeit der Realisierung einer derartigen raumsparenden Anordnung erstmals erkannt und in die Tat umgesetzt zu haben.

Der Begriff "raumsparend" ist dabei dahingehend zu verstehen, dass die beiden Rigolenkomponenten in dieser raumsparenden Anordnung weniger Volumen einnehmen als in ihrer Montageanordnung, in welcher sie mit den Endflächen der Stützpfeiler mittelbar oder unmittelbar aneinander anliegen.

Zur Realisierung dieser raumsparenden Anordnung nähert man die beiden Rigolenkomponenten mit ihren offenen Korbseiten aneinander an, bringt jedoch nicht die freien Endflächen der Stützpfeiler in gegenseitige Anlage, wie man das bei der werkseitigen Vormontage der Rigolenkomponenten zu einer Rigoleneinheit tun würde, sondern ordnet die beiden Rigolenkomponenten gegeneinander leicht versetzt an, bevor man sie weiter derart aneinander annähert, dass die Rigolenkomponenten mit ihren Stützpfeilern und gegebenfalls weiteren Elementen der Rigolenkomponenten, beispielsweise zwischen benachbarten Stützpfeilern vorgesehene Gitterstrukturen, ineinandergreifen. Die beiden Rigoleneinheiten können dabei längs der vorbestimmten Richtung oder/und längs der hierzu orthogonal verlaufenden Richtung der Ebene der Basiswand gegeneinander versetzt angeordnet werden. Auf diese Weise können in dem gleichen Ladevolumen eines Lastkraftwagens mehr als eineinhalb Mal so viele Rigolenkomponenten transportiert werden, als dies bei den vorbekannten Rigolenkomponenten der Fall war.

An dieser Stelle sei darauf hingewiesen, dass die Basiswand in der üblichen Einbauorientierung der Rigolenkomponenten im Wesentlichen horizontal verläuft, während die Stützpfeiler im Wesentlichen vertikal verlaufen. Bei der vorstehend angesprochenen Anordnung der erfindungsgemäßen Rigolenkomponenten mit aufeinander zu weisenden offenen Korbseiten bildet die Basiswand der einen Rigolenkomponente die Bodenwand der aus den beiden Rigolenkomponenten gebildeten Rigoleneinheit, während die Basiswand der jeweils anderen Rigolenkomponente die Deckenwand der Rigoleneinheit bildet.

Um sicherstellen zu können, dass die Rigolenkomponenten in der raumsparenden Anordnung bleiben, bis sie auf der Baustelle in ihre Montageanordnung gebracht, d.h. zu einer Rigoleneinheit zusammengefügt, und mit anderen Rigoleneinheiten zu einer Rigole verbaut werden, wird vorgeschlagen, dass die Rigolenkomponente der Basiswand benachbart wenigstens ein Verbindungselement aufweist, welches dazu ausgebildet ist, in der raumsparenden Anordnung mit einem Gegenelement einer identisch ausgebildeten Rigolenkomponente, vorzugsweise dem Ende eines Stützpfeilers dieser identisch ausgebildeten Rigolenkomponente in Halteeingriff zu treten. Dieses Verbindungselement kann dabei ein von der Basiswand abstehendes Säulenelement sein, das an seiner von der Basiswand abgewandten Stirnfläche mit einem Verbindungsvorsprung oder einer Verbindungsöffnung ausgebildet ist. Die Länge des Säulenelements kann zwischen etwa 10% und etwa 25%, vorzugsweise etwa 17%, der Länge der Stützpfeiler betragen.

Da Rigolenkomponenten mit derartigen Verbindungselementen bislang noch nicht bekannt sind, wird für sie auch unabhängig von der raumsparenden Anordnung selbstständiger Schutz angestrebt.

Ein weiteres Problem, das sich bei Rigolenkomponenten stets stellt, ist die Stabilität der aus ihnen gebildeten Rigoleneinheit bzw. gesamten Rigole gegenüber vom Erdreich seitlich auf sie einwirkenden Schubkräften. Um einerseits diese Stabilität erhöhen, andererseits aber auch die raumsparende Anordnung ermöglichen zu können, wird vorgeschlagen, dass die Rigolenkomponente der eingangs genannten Art ferner wenigstens ein Strebenelement umfasst, das zwischen zwei einander in einer vorbestimmten Richtung benachbarten Stützpfeilern vorgesehen ist, zur Erstreckungsrichtung der Stützpfeiler zumindest abschnittsweise schräg verläuft und mit seinem einen Ende mit einem der Stützpfeiler und mit seinem anderen Ende mit der Basiswand oder/und dem anderen Stützpfeiler verbunden ist, wobei der an das wenigstens eine Strebenelement angrenzende und von der Basiswand abgewandte Abschnitt des Raumbereichs zwischen den beiden benachbarten Stützpfeilern, zwischen denen sich das Strebenelement erstreckt, frei von weiteren Elementen der Rigolenkomponente ist. Durch diese Ausbildung ist es möglich, zwei identisch ausgebildete Rigolenkomponenten ineinandergeschachtelt anzuordnen, wobei beispielsweise die Stützpfeiler aneinander vorbei in den von weiteren Elementen der Rigolenkomponenten freien Raumbereich der jeweils anderen Rigolenkomponente oder den Innenbereich der jeweils anderen Rigolenkomponente eintreten können. In der Montageanordnung verleiht das wenigstens eine Strebenelement der Rigolenkomponente die gewünschte Stabilität gegenüber seitlichen Schubkräften.

Da Rigolenkomponenten mit derart angeordneten Strebenelementen bislang noch nicht bekannt sind, wird für sie auch unabhängig von der raumsparenden Anordnung und der Transportverbindung selbstständiger Schutz angestrebt.

An dieser Stelle sei darauf hingewiesen, dass unter dem "Raumbereich zwischen den beiden benachbarten Stützpfeilern" dasjenige Volumen verstanden wird, das von der Umhüllenden der beiden Stützpfeiler abzüglich des Volumens der beiden Stützpfeiler umgrenzt wird. Zur Veranschaulichung des Begriffs "Umhüllende" stelle man sich vor, man umwickle die beiden Stützpfeiler mit Kunststofffolie. Die innere Oberfläche dieser Kunststofffolie bildet dann die "Umhüllende" der Stützpfeiler. Im Falle von Stützpfeilern mit rechteckigem oder quadratischem Grundriss wird der "Raumbereich zwischen den beiden benachbarten Stützpfeilern" demnach von folgenden Flächen begrenzt: dem zwischen den beiden Stützpfeilern angeordneten Abschnitt der Oberseite der Bodenwand, einer hierzu parallelen, virtuellen Fläche zwischen den beiden Stirnseiten der Stützpfeiler, den aufeinander zu weisenden Begrenzungsflächen der Stützpfeiler, und den beiden virtuellen Verbindungsflächen der vorder- und rückseitigen Begrenzungsflächen der Stützpfeiler, wobei sich die Angaben "vorder-" und "rück-" auf eine orthogonal zur vorbestimmten Richtung und orthogonal zur Erstreckungsrichtung der Stützpfeiler verlaufende Blickrichtung beziehen. Selbstverständlich ist das Konzept der "Umhüllenden" aber auch bei Stützpfeilern mit rundem, beispielsweise kreisrundem, ovalem oder elliptischem, Durchmesser anwendbar.

Darüber hinaus beziehen sich die Worte "frei von" auf einen Zustand, in dem die Rigolenkomponente für sich alleine betrachtet wird, das heißt insbesondere auf einen Zustand, in dem sie nicht mit einer anderen Rigolenkomponente ineinander geschachtelt angeordnet ist.

Der von weiteren Elementen der Rigolenkomponente freie Abschnitt des Raumbereichs zwischen den beiden benachbarten Stützpfeilern bildet eine Ausnehmung, die sowohl nach oben, d.h. von der Basiswand weg weisend, über den gesamten Abstand zwischen den beiden Stützpfeilern offen ist als auch zur Innenseite und zur Außenseite der Rigolenkomponente hin offen ist. In diese Ausnehmung können bei der ineinander geschachtelten Anordnung zweier Rigolenkomponenten Elemente der jeweils anderen Rigolenkomponente eingeführt werden. Die Ausnehmung weist eine Tiefe auf, die wenigstens 25%, vorzugsweise wenigstens 50% der Höhe der Stützpfeiler beträgt.

Die "wenigstens teilweise wasserdurchlässig ausgebildeten" Flächen der Rigolenkomponente können beispielsweise von einer Gitterstruktur gebildet sein oder aber auch von einer im Wesentlichen geschlossenen Wandung, die mit einer Mehrzahl von Durchbrechungen versehen ist, die den Durchtritt von Wasser zulassen.

In Weiterbildung der Erfindung wird vorgeschlagen, dass das Strebenelement ein Verstärkungselement ist, welches den Stützpfeiler, mit welchem sein eines Ende verbunden ist, gegen ein seitliches Kippen in der vorbestimmten Richtung abstützt bzw. hält. Vorzugsweise kann das Verstärkungselement zwischen seinen beiden Enden vollständig geradlinig verlaufen. Darüber hinaus kann der Querschnitt des Verstärkungselements im Wesentlichen die gleichen Querschnittsabmessungen aufweisen, wie der Stützpfeiler, mit dem sein eines Ende verbunden ist. Dies hat den Vorteil, dass das Verstärkungselement sowohl Zug- als auch Druckkräfte aufnehmen kann. Grundsätzlich ist es jedoch auch denkbar, dass das Verstärkungselement als reine Zugstrebe ausgebildet ist.

Im Hinblick auf einen hohen Raumgewinn durch die ineinandergeschachtelte Anordnung zweier erfindungsgemäßer Rigolenkomponenten ist es vorteilhaft, wenn die beiden Rigoleneinheiten nur längs der vorbestimmten Richtung gegeneinander versetzt angeordnet sind.

Wenn das andere Ende des Strebenelements nur mit der Basiswand verbunden ist, ist es weiter zurückgesetzt angeordnet, so dass der Stützpfeiler oder andere Elemente der jeweils anderen Rigolenkomponente noch tiefer in den freien Raumbereich der hier betrachteten Rigolenkomponente eingeführt werden kann bzw. können. Grundsätzlich ist es möglich, das Strebenelement so weit zurückgesetzt anzuordnen, dass das andere Ende des Strebenelements von dem anderen Stützpfeiler auf Höhe der Basiswand einen Abstand aufweist, der wenigstens gleich der Ausdehnung des Stützpfeilers in der vorbestimmten Richtung an dessen von der Basiswand entferntem Ende ist. In diesem Fall könnte der Stützpfeiler der jeweils anderen Rigolenkomponente bis zur Basiswand der betrachteten Rigolenkomponente in den freien Raumbereich eingeführt werden. Dies würde zwar einerseits den größtmöglichen Raumgewinn beim Ineinanderschachteln der Rigolenkomponenten ermöglichen, hätte andererseits aber zur Folge, dass das Strebenelement eine geringere Verstärkungswirkung entfalten kann als ein Strebenelement, dessen anderes Ende auch mit dem anderen Stützpfeiler verbunden ist. Als Kompromiss zwischen diesen beiden einander widerstrebenden Forderungen wird daher erfindungsgemäß vorgeschlagen, dass der Abstand zwischen etwa 50% und etwa 90%, vorzugsweise etwa 75%, der Ausdehnung des Stützpfeilers in der vorbestimmten Richtung an dessen von der Basiswand entferntem Ende beträgt.

Da an der Außenfläche der Rigolenkomponente zumindest abschnittsweise keine Gitterstruktur vorgesehen werden kann, um das Ineinanderschachteln zweier Rigolenkomponenten ermöglichen zu können, ist es vorteilhaft, den hierdurch frei werdenden Raum zumindest teilweise zur Anordnung des wenigstens einen Strebenelements zu nutzen. Daher wird vorgeschlagen, dass die beiden benachbarten Stützpfeiler an einem Rand der Basiswand angeordnet sind. Im Hinblick auf einen möglichst hohen Raumgewinn durch die ineinandergeschachtelte Anordnung der Rigolenkomponenten ist dabei vorteilhafterweise einer der beiden benachbarten Stützpfeiler an einer Ecke des Rands der Basiswand angeordnet.

In Weiterbildung dieser Ausführungsform kann gemäß einer ersten Variante ferner vorgesehen sein, dass an diesem Rand wenigstens ein weiteres Paar von Stützpfeilern mit einem dazwischen angeordneten Strebenelement vorgesehen ist. Dabei können vorzugsweise sämtliche Strebenelemente der diesem Rand der Basiswand zugeordneten Paar von Stützpfeilern zumindest hinsichtlich ihrer Orientierung, vorzugsweise auch hinsichtlich ihrer Anordnung relativ zu den ihnen zugeordneten Stützpfeilern und der Basiswand, identisch ausgebildet sein. Vorzugsweise kann dabei ferner vorgesehen sein, dass der Raumbereich zwischen den einander nächstgelegenen Stützpfeilern benachbarter Paare von Stützpfeilern frei von jedweden Elementen der Rigolenkomponente ist. Dieser Raumbereich kann beispielsweise als Zugangsöffnung zu einem Inspektionskanal der Rigolenkomponente genutzt werden.

Gemäß einer zur ersten zusätzlichen oder alternativen, zweiten Variante kann an dem diesem Rand gegenüberliegenden Rand der Basiswand ebenfalls wenigstens ein Paar von Stützpfeilern mit dazwischen angeordnetem Strebenelement vorgesehen sein. Vorzugsweise sind auch gemäß dieser Variante sämtliche Strebenelemente der diesen beiden zueinander vorzugsweise parallel verlaufenden Rändern der Basiswand zugeordneten Paare von Stützpfeilern zumindest hinsichtlich ihrer Orientierung, vorzugsweise auch hinsichtlich ihrer Anordnung relativ zu den ihnen zugeordneten Stützpfeilern und der Basiswand, identisch ausgebildet.

In Weiterbildung der Erfindung kann vorgesehen sein, dass in dem an das Strebenelement angrenzenden und der Basiswand zugewandten Abschnitt des Raumbereichs zwischen den beiden benachbarten Stützpfeilern, zwischen denen sich das Strebenelement erstreckt, wenigstens ein weiteres Strebenelement oder/und eine Gitterstruktur oder/und eine geschlossene Wand angeordnet ist. Hierdurch kann beispielsweise die Stabilität der Rigolenkomponente weiter verbessert werden.

Die Rigolenkomponente kann wenigstens eine zumindest teilweise wasserdurchlässige Wandung umfassen, die von der Basiswand im Wesentlichen orthogonal absteht und sich in einer zu dem einen Rand der Basiswand im Wesentlichen orthogonal verlaufenden Richtung erstreckt. Diese Wandungen können beispielsweise als Stützflächen für ein Geotextil dienen, mit welchem eine aus einer Mehrzahl derartiger Rigolenkomponenten gebildete Rigole im im Erdreich eingebauten Zustand umwickelt ist, um einerseits den Durchtritt von Wasser insbesondere aus der Rigole heraus ermöglichen, andererseits aber den Eintritt von Erdreich in die Rigole hinein verhindern zu können.

Sind mehrere solche zumindest teilweise wasserdurchlässige Wandungen vorgesehen, so können diese die Rigolenkomponente in eine Mehrzahl von, beispielsweise drei, Kammern unterteilen, die jeweils durch eine solche Wandung voneinander getrennt sind. Ist zwischen zwei an dem einen Rand einander benachbart angeordneten Stützpfeilern kein Strebenelement oder sonstiges Element der Rigolenkomponente vorhanden, so kann diese Kammer als Inspektionskanal genutzt werden. Die diese Kammer begrenzenden zumindest teilweise wasserdurchlässigen Wandungen dienen als Führungswandungen für ein in den Inspektionskanal von außen eingeführtes Inspektionsgerät, beispielsweise einen Kameraträger zur optischen Inspektion der Rigolenkomponente oder eine Hochdrucklanze, welche zur Reinigung der Rigole Wasser unter hohem Druck ausstößt. Für beide Anwendungsfälle ist es vorteilhaft, wenn der Anteil der Durchbrechungen in diesen Führungswandungen an der gesamten Wandungsfläche mehr als 50%, vorzugsweise mehr als 75%, ausmacht. Ferner kann der diesem Inspektionskanal zugeordnete Abschnitt der Bodenwandung als Stützfläche für das vorstehend genannte Inspektionsgerät dienen. Hierzu ist es vorteilhaft, wenn die Gesamtfläche der Durchbrechungen in diesem Abschnitt der Bodenwandung höchstens 50%, vorzugsweise höchstens 25%, noch bevorzugter höchstens 10%, der Gesamtfläche dieses Abschnitts der Bodenwand ausmachen. Im Falle von länglichen Durchbrechungen in diesem Abschnitt der Bodenwand ist es zudem vorteilhaft, wenn diese quer zur Längserstreckungsrichtung des Inspektionskanals verlaufen.

Wie vorstehend bereits erwähnt, können aus Rigolenkomponenten der eingangs genannten Art, gegebenfalls unter Verwendung weiterer Hilfskomponenten, wie Zwischenplatten, Deckplatten und dergleichen, Rigoleneinheiten zusammengesetzt werden, die wiederum zu Rigolen zusammengestellt werden können, welche im Erdreich verlegt der Zwischenspeicherung oder/und Versickerung von Wasser, beispielsweise Regenwasser, dienen. Dies gilt auch für Rigolenkomponenten, die wenigstens eine der erfindungsgemäßen Weiterbildungen aufweisen.

Gemäß einer ersten Variante kann eine solche Rigoleneinheit zwei, vorzugsweise identisch ausgebildete, erfindungsgemäße Rigolenkomponenten umfassen, wobei die eine Rigolenkomponente bezüglich der Orientierung der jeweils anderen Rigolenkomponente invertiert angeordnet ist, und die Stützpfeiler der beiden Rigolenkomponenten mit ihren freien Enden aneinander anliegen. In diesem Fall können die Endflächen der Stützpfeiler zur Verbindung der beiden Rigolenkomponenten an den Endflächen der Stützpfeiler Verbindungselemente nach dem Stecker-Buchse-Prinzip vorgesehen sein. Beispielsweise ist es möglich, dass an einem Teil der Stützpfeiler Steckerelemente einstückig ausgebildet sind, während die freien Enden weiterer Stützpfeiler als Buchsen ausgebildet sind. Grundsätzlich ist es jedoch auch möglich, die Endflächen aller Stützpfeiler als Stecker oder Buchse auszubilden und zur Verbindung der beiden Rigolenkomponenten gesonderte Doppelbuchsen- bzw. Doppelsteckerelemente vorzusehen.

Ferner ist es möglich, dass die Endflächen der Stützpfeiler unter Anordnung einer Zwischenplatte zwischen den beiden Rigolenkomponenten mittelbar aneinander anliegen. Dabei können in dieser Zwischenplatte Steckerabschnitte oder/und Buchsenabschnitte oder/und Doppelsteckerabschnitte oder/und Doppelbuchsenabschnitte vorgesehen sein.

Gemäß einer zweiten Variante kann eine solche Rigoleneinheit eine erfindungsgemäße Rigolenkomponente und eine Deckplatte umfassen, die mit den freien Enden der Stützpfeiler der Rigolenkomponente verbindbar ist. Dabei kann hinsichtlich der Ausbildung der Verbindung zwischen den freien Enden der Stützpfeiler der Rigolenkomponente und der Deckplatte auf die vorstehenden Ausführungen zu Stecker-Buchsen-Verbindungen verwiesen werden.

Die Erfindung wird im Folgenden an einigen Ausführungsbeispielen anhand der beigefügten Zeichnung näher erläutert werden. Es stellt dar:

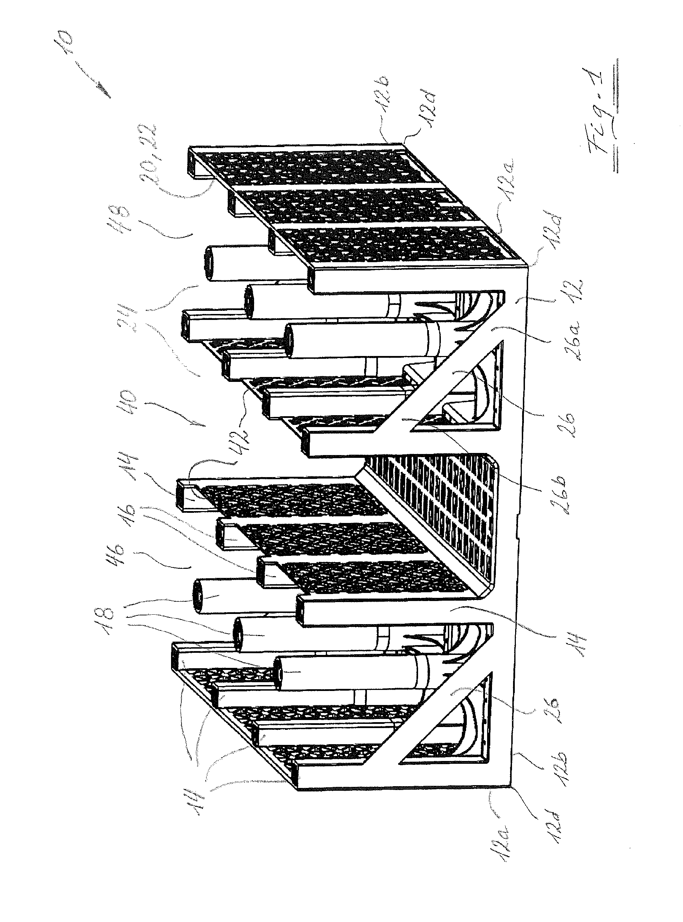

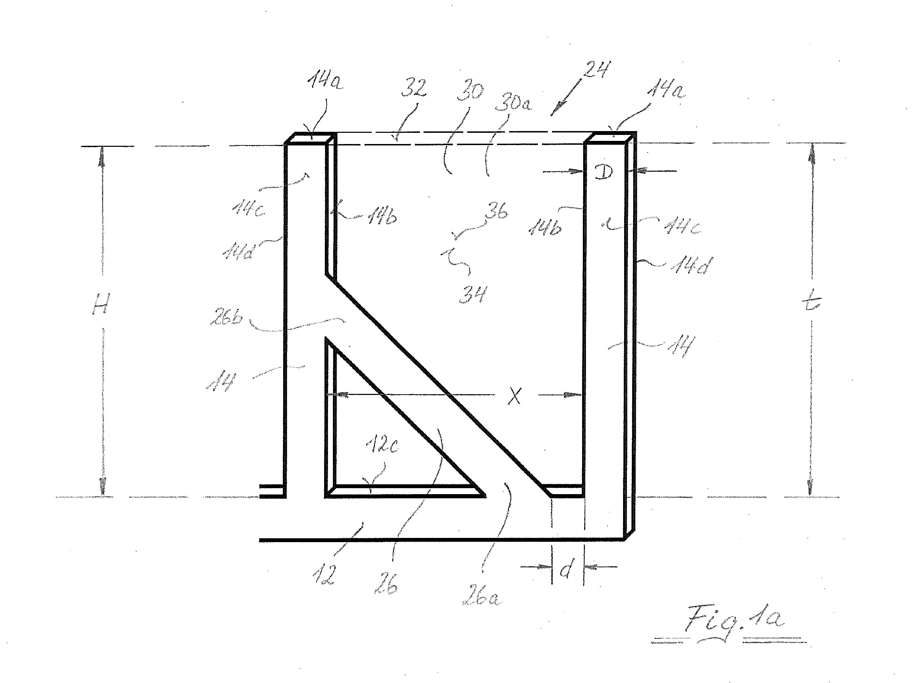

- Figur 1: eine perspektivische Ansicht einer ersten Ausführungsform einer erfindungsgemäßen Rigolenkomponente;
- Figur 1 a: eine schematische Darstellung zur Erläuterung des Begriffs "Raumbereich zwischen zwei Stützpfeilern";
- Figur 2: eine perspektivische Ansicht zweier identisch ausgebildeter erfindungsgemäßer Rigolenkomponenten gemäß Figur 1 in ihrer ineinandergeschachtelten Transport- oder Lagerstellung;
- Figur 3: eine perspektivische Ansicht zweier identisch ausgebildeter erfindungsgemäßer Rigolenkomponenten gemäß Figur 1 in einer ersten Variante ihrer Einbaustellung;
- Figur 4: eine Ansicht ähnlich Fig. 3 einer weiteren Variante der Einbaustellung;
- Figur 5: eine perspektivische Ansicht einer aus einer erfindungsgemäßen Rigolenkomponente gemäß Figur 1 und einer Deckplatte gebildeten Rigoleneinheit;
- Fig. 6a bis 6c: schematische Stirnansichten zur Erläuterung von drei Ausführungsformen mit unterschiedlich großem Raumgewinn durch das Ineinanderschachteln;
- Figur 7: eine Ansicht der erfindungsgemäßen Rigolenkomponente aus Figur 1, jedoch in stärkerer Perspektive;
- Figur 8: eine vergrößerte Ansicht eines in Figur 2 verdeckten Details;
- Figur 9: eine Ansicht ähnlich Figur 1 einer weiteren Ausführungsform einer erfindungsgemäßen Rigolenkomponente; und
- Figur 10: eine Ansicht ähnlich Figur 1 einer weiteren Ausführungsform einer erfindungsgemäßen Rigolenkomponente.

In Fig. 1 ist eine erfindungsgemäße Rigolenkomponente ganz allgemein mit 10 bezeichnet. Sie umfasst eine Bodenplatte 12, die in der dargestellten Ausführungsform eine im Wesentlichen quadratische Grundfläche mit zwei Längsrändern 12a und zwei Querrändern 12b aufweist, sowie Stützpfeiler 14, 16 und 18, die von der Bodenplatte 12 im Wesentlichen orthogonal abstehen.

In dem in Fig. 1 dargestellten Ausführungsbeispiel sind die Zwischenräume 20 zwischen den an den Längsrändern 12a angeordneten Stützpfeilern 14 jeweils durch eine Gitterstruktur 22 überdeckt, welche in dem im Erdreich verbauten Zustand der Rigolenkomponente 10 als Anlagefläche für eine benachbarte Rigolenkomponente oder als Stützfläche für ein Geotextil dient, wobei das Geotextil die aus einer Mehrzahl von Rigolenkomponenten gebildete Rigole umhüllt, um zwar einerseits das Versickern von Wasser aus der Rigole ins Erdreich zu ermöglichen, andererseits aber das Eindringen von Erdreich in die Rigole verhindern zu können.

Die zwischen den den Querrändern 12b zugeordneten Stützpfeilern 14 vorgesehenen Zwischenräume 24 sind hingegen nicht mit derartigen Gitterstrukturen überdeckt. In dem dargestellten Ausführungsbeispiel, bei welchem die Rigolenkomponente 10 an ihren Querrändern 12b jeweils vier Stützpfeiler 14 und somit drei Zwischenräume 24 aufweist, sind in den beiden äußeren dieser Zwischenräume 24 Strebenelemente 26 vorgesehen, welche relativ zur Bodenwand 12 und relativ zu den Stüzpfeilern 14 schräg verlaufen, mit ihrem einen Ende 26a mit der Bodenwand 12 und mit ihrem anderen Ende 26b mit dem Stützpfeiler 14 verbunden sind. Auf diese Weise verstärken die Strebenelemente 26 die Struktur der Rigolenkomponente 10 gegen seitliche Lasten, insbesondere den Erddruck, da sie ein Kippen der ihnen zugeordneten Stützpfeiler 14 verhindern.

In der in Fig. 1 dargestellten Ausführungsform sind die Strebenelemente 26 als flache, hochkant stehende Streifen ausgebildet, so dass sie zwar Zugkräften widerstehen können, nicht aber Druckkräften. Die Strebenelemente 26 der Ausführungsform gemäß Fig. 1 sind somit als reine Zugelemente ausgebildet.

Anzumerken ist noch, dass vier der Stützpfeiler 14 an den Ecken 12d der Basiswand 12 angeordnet sind.

Wie man deutlicher in Fig. 1a erkennt, ist das Strebenelement 26 in dem Raumbereich 30 zwischen den beiden Stützpfeilern 14 angeordnet, und ist in diesem Raumbereich 30 ausschließlich das Strebenelement 26 angeordnet. Insbesondere ist der Abschnitt 30a des Raumbereichs 30, der auf der von der Bodenwand 12 abgewandten Seite des Strebenelements 26 angeordnet ist, frei von jedweden weiteren Elementen der Rigolenkomponente 10. Der Raumbereich 30 wird in dem dargestellten Ausführungsbeispiel, bei dem die Stützpfeiler 14 eine rechteckige bzw. quadratische Querschnittsfläche aufweisen, durch folgende Flächen umgrenzt: dem zwischen den Stützpfeilern 14 angeordneten Abschnitt 12c der Oberseite der Bodenwand 12, einer hierzu parallelen, virtuellen Fläche 32, welche die Stirnflächen 14a der Stützpfeiler 14 miteinander verbindet, den beiden aufeinander zu weisenden Seitenflächen 14b der Stützpfeiler 14, sowie zwei zueinander parallelen, virtuelle Flächen 34 und 36, die die vorderen Seitenflächen 14c bzw. die hinteren Seitenflächen 14d der Stützpfeiler 14 miteinander verbinden.

Der von weiteren Elementen der Rigolenkomponente 10 freie Abschnitt 30a des Raumbereichs 30 zwischen den beiden benachbarten Stützpfeilern 14 und oberhalb des Strebenelements 26 bildet eine Ausnehmung, die sowohl nach oben, d.h. von der Basiswand 12 weg weisend, über den gesamten Abstand x zwischen den beiden Stützpfeilern 14 offen ist als auch zur Innenseite 36 und zur Außenseite 34 der Rigolenkomponente 10 hin offen ist.

Ferner ist darauf hinzuweisen, dass in der mittleren der Öffnungen 24 kein derartiges Strebenelement angeordnet ist. Über diese Öffnung ist daher ein ungehinderter Zutritt in den Innenraum der Rigolenkomponente 10 möglich. Insbesondere sind diese mittleren Öffnungen 24 an den vorderen und hinteren Querseiten 12b durch einen Inspektionskanal 40 miteinander verbunden. Dieser Inspektionskanal 40 wird seitlich durch sich parallel zu den Längsrändern 12a der Rigolenkomponente 10 erstreckende Gitterstrukturen 42 zwischen den endständigen Stützpfeilern 14 und den im Inneren der Rigolenkomponente angeordneten Stützpfeilern 16 begrenzt. Diese Gitterstrukturen 42 dienen als seitliche Führungsflächen für ein in den Inspektionskanal eingeführtes Inspektionsgerät. Die Gitterstrukturen 42 weisen hierzu bezogen auf ihre Gesamtfläche einen großen Anteil an Durchbrechungen auf, welche zum einen einen relativ freien Blick in die neben dem Inspektionskanal 40 angeordneten Kammern 46 und 48 der Rigolenkomponente 10 erlauben, und zum anderen den relativ ungehinderten Durchtritt von aus einem Reinigungsgerät unter hohem Druck ausgestoßenem Wasser.

Ferner ist die Oberseite der Bodenwand 12 im Bereich des Inspektionskanals 40 als Stützfläche für das Inspektionsgerät ausgebildet. Sie weist hierzu bezogen auf ihre Gesamtfläche lediglich einen geringen Anteil an Durchbrechungen auf, welche beispielsweise durch Längsschlitze gebildet sind, die sich vorzugsweise quer zur Längserstreckungsrichtung des Inspektionskanals 40 erstrecken.

Der Inspektionskanal 40 unterscheidet sich von den beiden anderen Kammern 46 und 48 der Rigolenkomponente 10 ferner dadurch, dass in ihm keine zusätzlichen Stützpfeiler 18 angeordnet sind.

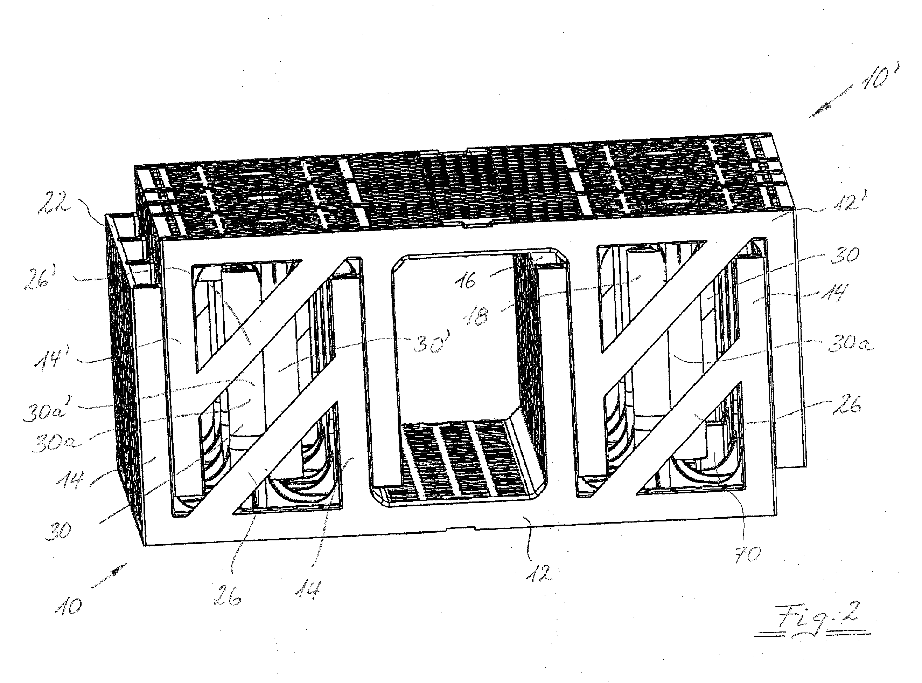

Aufgrund der Tatsache, dass der oberhalb des Strebenelements 26 angeordnete Raumabschnitt 30a des Raumbereichs 30 zwischen den Stützpfeilern 14 frei von Elementen der Rigolenkomponente 10 ist, können zwei derartige Rigolenkomponenten 10 und 10' zur Lagerung bzw. zum Transport ineinandergeschachtelt angeordnet werden, wie dies in Fig. 2 dargestellt ist. In diesem ineinandergeschachtelten Zustand greifen die Stützpfeiler 14 und 14' sowie die Strebenelemente 26 und 26' der beiden Rigolenkomponenten 10 und 10' jeweils in den freien Abschnitt 30a', 30a der jeweils anderen Rigolenkomponente 10' bzw. 10 ein. Wie man in Fig. 2 ferner erkennt, liegen die Stützpfeiler 14 und 14' in dem dargestellten Ausführungsbeispiel mit ihren Stirnflächen nicht an der Bodenwand 12', 12 der jeweils anderen Rigolenkomponente 10', 10 an. Dies lässt zunächst vermuten, dass hier Potential für eine weitere Raumeinsparung nicht genutzt wurde. Dies ist jedoch nicht der Fall. Vielmehr stellt die in den Figuren 1 und 2 gezeigte Ausführungsform der Rigolenkomponente 10 einen guten Kompromiss zwischen zwei einander widerstrebenden Forderungen dar:

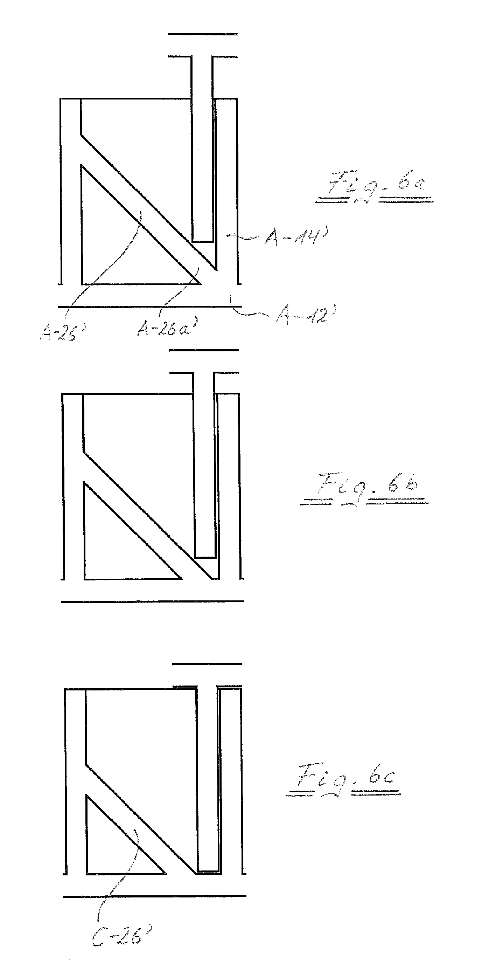

Mit Bezug auf die schematischen Darstellungen gemäß Figuren 6a bis 6c würde die Anordnung gemäß Fig. 6c den größten Raumgewinn erbringen, sie hat jedoch gleichzeitig aufgrund der relativ kurzen Ausbildung des Strebenelements C-26' die geringste Stabilität gegenüber seitlich auf die Rigolenkomponente einwirkenden Kräften. Gerade diese Seitenstabilität ist jedoch im im Erdreich verbauten Zustand der Rigolenkomponenten wichtig, da dort beim Verdichten des Erdreichs hohe Schubkräfte auf die aus einer Mehrzahl von Rigolenkomponenten gebildete Rigole einwirken. Eine hohe Seitenstabilität kann, wie man leicht einsieht, mit der Ausbildung gemäß Fig. 6a erzielt werden, bei der das eine Ende A-26a' des Strebenelements A-26' nicht nur mit der Bodenwand A-12', sondern auch dem Stützpfeiler A-14' verbunden ist. Diese Variante bietet allerdings einen geringeren Raumgewinn bei Lagerung bzw. Transport. Die Ausbildung gemäß Fig. 6b entspricht der auch in den Figuren 1, 1a und 2 dargestellten Ausbildung, die einerseits einen Raumgewinn infolge des Ineinanderschachtelns bei Transport und Lagerung bietet, andererseits aber auch eine ausreichende Seitenstabilität im verbauten Zustand gewährleistet. Immerhin beträgt der Raumgewinn verglichen mit der aus der EP 1 260 640 A1 bekannten Rigolenkomponente mehr als 50%.

Wie in Fig. 1a dargestellt ist, weist das Strebenelement 26 auf Höhe der Basiswand 12 von dem Stützpfeiler 14 einen Abstand d auf, der etwa 80% der Ausdehnung D des Stützpfeilers 14 an dessen von der Basiswand 12 entferntem Ende ist, d.h. dessen Stirnfläche 14a benachbart. Ferner weist die Ausnehmung 30a, d.h. der Abschnitt 30a des Raumbereichs 30, eine Tiefe t auf, die wenigstens 25%, vorzugsweise wenigstens 50%, der Höhe H der Stützpfeiler 14 beträgt. In dem dargestellten Ausführungsbeispiel erstreckt sie sich an ihrer tiefsten Stelle sogar über deren volle Höhe H.

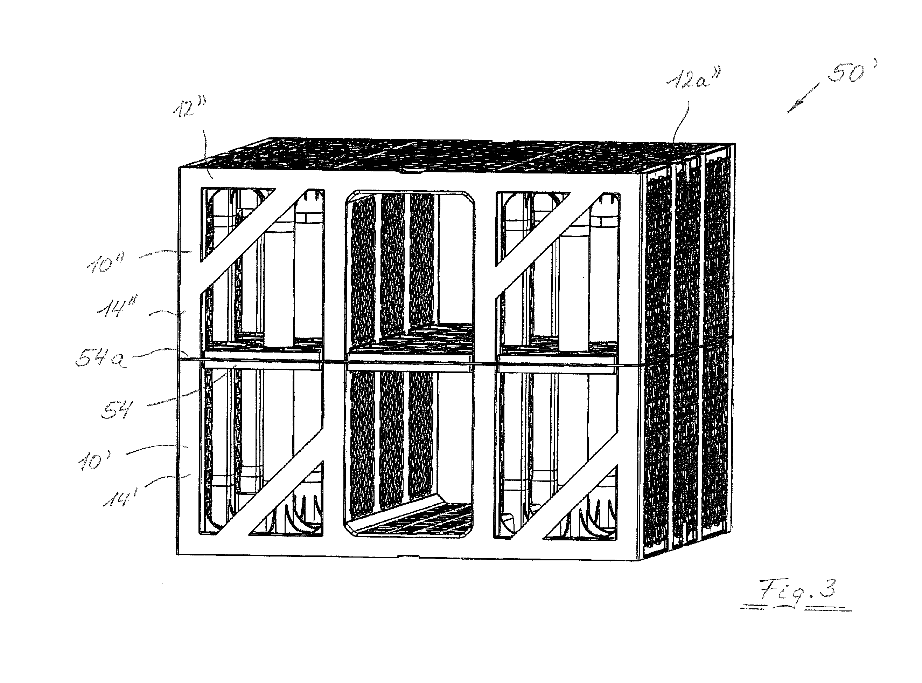

In den Figuren 3 bis 5 sind verschiedene Varianten dargestellt, wie die erfindungsgemäßen Rigolenkomponenten 10 im Erdreich zu Rigoleneinheiten 50', 50", 50'" kombiniert werden können. Aus einer Mehrzahl der in den Figuren 3 bis 5 dargestellen Rigoleneinheiten 50', 50", 50'" können Rigolen zusammengesetzt werden, welche im Erdreich verlegt der Zwischenspeicherung oder/und Versickerung von Wasser, beispielsweise Regenwasser, dienen.

Die Rigoleneinheit 50' gemäß Fig. 3 wird erhalten, indem man zwei Rigolenkomponenten 10', 10" gemäß Fig. 1 verwendet, wobei man die obere Rigolenkomponente 10" um eine zum Längsrand 12a" ihrer Bodenwand 12" parallele Achse um 180° dreht. Auf diese Weise erhält man eine Rigoleneinheit, bei der die Strebenelemente 26 der beiden Rigolenkomponenten alle die gleiche Orientierung aufweisen. Eine hohe Seitenstabilität gegenüber in der Ansicht der Zeichnung sowohl von links als auch von rechts einwirkenden Seitenkräften kann in diesem Fall dadurch erhalten werden, dass man einander benachbarte derartige Rigoleneinheiten 50' mit unterschiedlicher Orientierung der Strebenelemente 26 nebeneinander anordnet. Die Seitenstabilität gegenüber von vorne bzw. hinten einwirkenden Seitenkräften wird durch die Gitterstrukturen 22 und 42 gewährleistet.

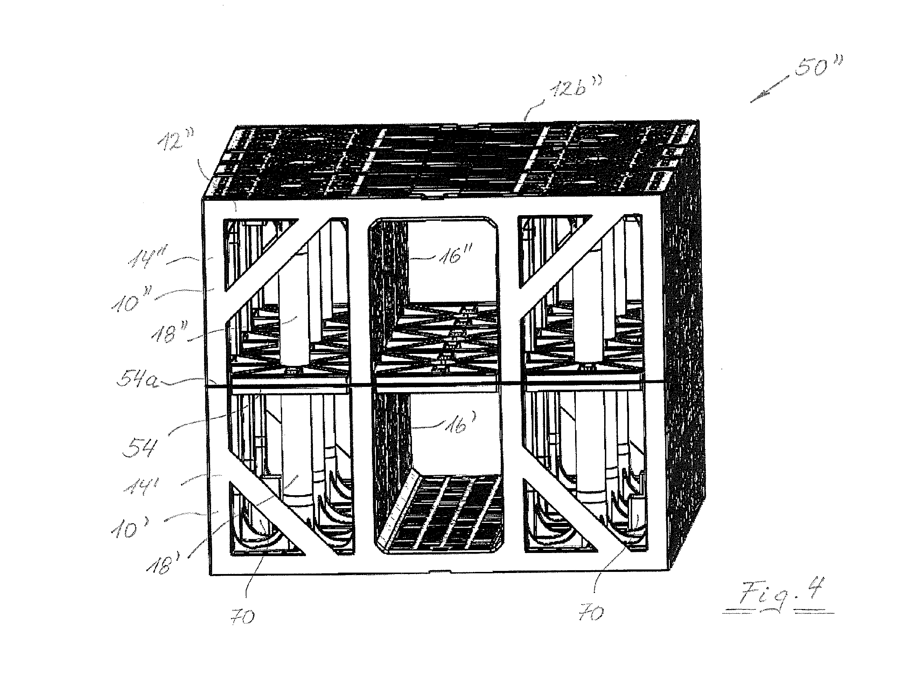

Bei der Ausführungsform gemäß Fig. 4 geht man ebenfalls von zwei identischen Rigolenkomponenten 10', 10" gemäß Fig. 1 aus, dreht die obere jedoch um eine zum Querrand 12b" ihrer Bodenwand 12" parallel verlaufende Achse um 180°. Bei der so erhaltenen Rigoleneinheit 50" haben die Strebenelemente 26 eine unterschiedliche Orientierung, so dass sie in der Ansicht der Zeichnung sowohl gegenüber von links als auch von rechts einwirkenden Seitenkräften der Rigoleneinheiten eine hohe Schubstabilität verleiht. Die Seitenstabilität gegenüber von vorne bzw. hinten einwirkenden Seitenkräften wird wiederum durch die Gitterstrukturen 22 und 42 gewährleistet.

Bei beiden Rigoleneinheiten 50' und 50" ist zwischen den beiden Rigolenkomponenten 10', 10" eine Zwischenplatte 54 vorgesehen, welche eine Mehrzahl von Doppelbuchsen-Abschnitten 54a aufweist, in die die Stützpfeiler 14', 16', 18' und 14", 16", 18" der Rigolenkomponenten 10', 10" eingeführt werden können, und die somit zur Verbindung der beiden Rigolenkomponenten 10', 10" dient. Darüber hinaus erhöht das Vorsehen dieser Zwischenplatte 54 auch die Seitenstabilität der Rigoleneinheiten 50', 50". Um die Zwischenplatte 54 auf die Rigolenkomponente 10 gemäß Fig. 1 auflegen zu können, sind die inneren Gitterstrukturen 42 etwas niedriger ausgebildet als die äußeren Gitterstrukturen 22, d.h. sie reichen im Unterschied zu diesen von der Bodenwand 12 nicht vollständig bis zu den Stirnflächen 14a der Stützpfeiler 14, 16 hinauf.

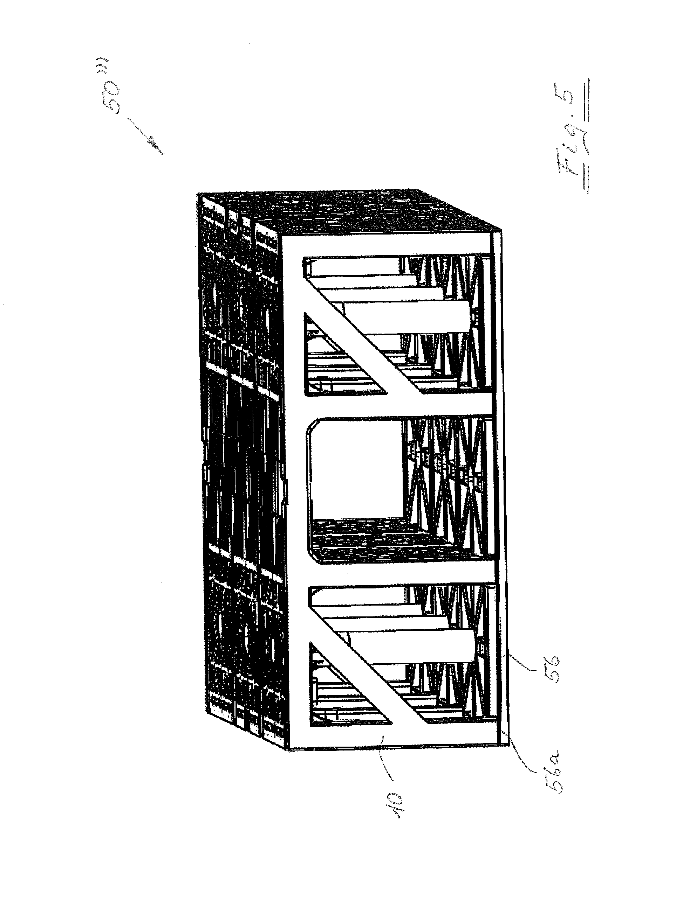

In Fig. 5 schließlich ist eine Rigoleneinheit 50"' dargestellt, die halb so hoch ausgebildet ist wie die Rigoleneinheiten 50' und 50". Diese Rigoleneinheit 50'" umfasst lediglich eine einzige Rigolenkomponente 10 und eine Deckplatte 56, die auf die freien Enden der Stützpfeiler 14, 16, 18 mit Buchsenabschnitten 56a aufgelegt wird. In dem dargestellten Ausführungsbeispiel ist die Rigoleneinheit 50'" invertiert angeordnet, d.h. mit auf der Deckplatte 56 aufstehender, invertiert angeordneter Rigolenkomponente 10. Hierbei entstehen aus der raumsparenden Anordnung zweier Rigolenkomponenten 10 mit zwei Deckplatten 56 insgesamt zwei Rigoleneinheiten 50"'.

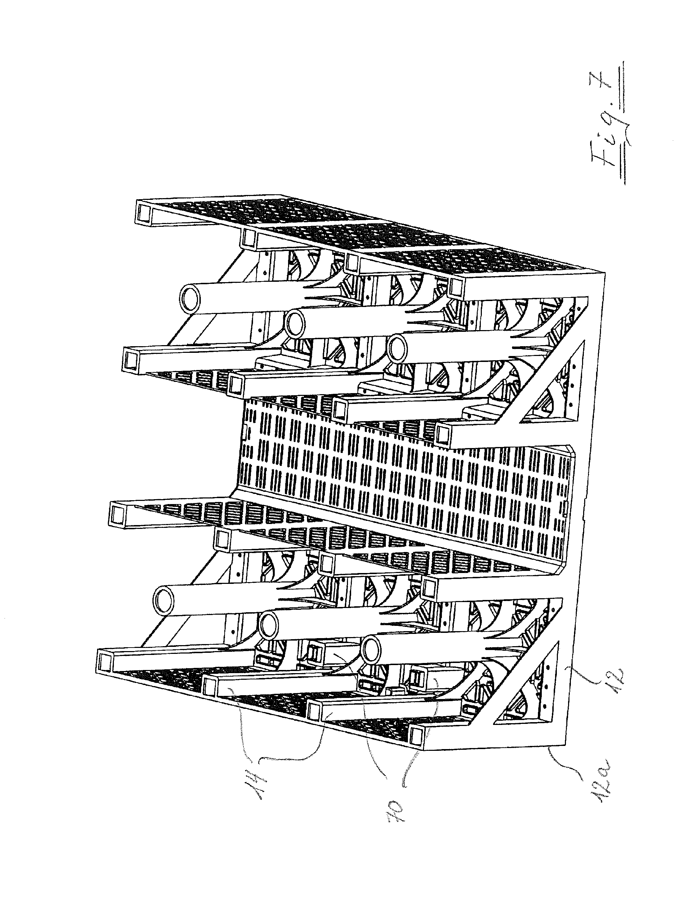

In Fig. 7 ist die Rigolenkomponente 10 aus Fig. 1 nochmals in einer stärkeren Perspektive dargestellt, so dass man einen besseren Blick in sie hinein hat. Auf diese Weise erkennt man auf der linken Seite der Darstellung, dass innerhalb der Rigolenkomponente 10 in unmittelbarer Nachbarschaft der beiden mittleren der am linken Längsrand 12a der Bodenplatte 12 angeordneten Stützpfeiler 14 zwei Verbindungssäulen 70 von der Bodenplatte 12 abstehen. Identisch ausgebildete Verbindungssäulen 70 können auch dem rechten Längsrand 12a der Bodenplatte 12 benachbart vorgesehen sein, wie man beispielsweise den Figuren 2 und 4 entnehmen kann.

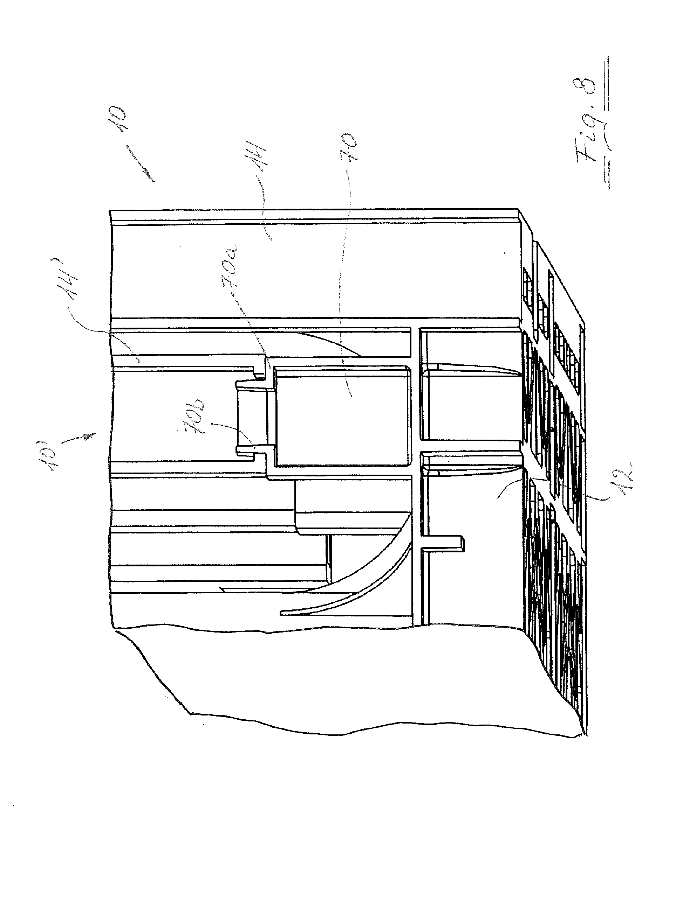

Wie in Fig. 8 dargestellt ist, die einen vergrößerten Schnitt eines in Fig. 2 verdeckten Details zeigt, weisen die Verbindungssäulen 70 an ihrem freien Ende 70a einen Verbindungsansatz 70b auf, der in eine entsprechende Öffnung in der Stirnfläche des Stützpfeilers 14' der jeweils anderen Rigolenkomponente 10' eingreift. Auf diese Weise können die beiden Rigolenkomponenten 10 und 10' in ihrer raumsparenden Anordnung sicher aneinander gehalten werden, beispielsweise durch Reibschluss oder auch Formschluss, insbesondere Verrastung. Grundsätzlich ist es auch denkbar, dass die Verbindungssäule 70 mit einer Verbindungsöffnung und die Stützpfeiler mit einem Verbindungsansatz ausgebildet sind.

An dieser Stelle sei nochmals darauf hingewiesen, dass die erfindungsgemäße Rigolenkomponente 10 entgegen der Darstellung in den Figuren 1 bis 8 auch entweder nur mit den Strebenelementen 26, nicht aber mit den Verbindungssäulen 70 oder auch nur mit den Verbindungssäulen 70, nicht aber mit den Strebenelementen 26 ausgebildet sein kann.

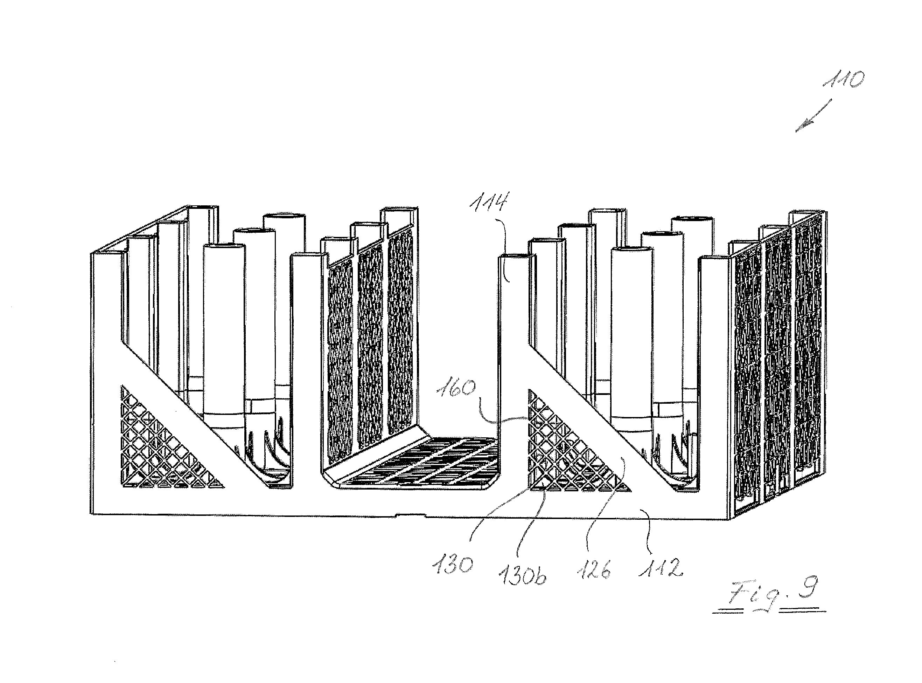

In Fig. 9 ist eine weitere Ausführungsform einer erfindungsgemäßen Rigolenkomponente dargestellt, die im Wesentlichen der Rigolenkomponente 10 gemäß Fig. 1 entspricht. Daher sind analoge Teile in Fig. 9 mit den gleichen Bezugszeichen versehen wie in Fig. 1, jedoch vermehrt um die Zahl 100. Die Rigolenkomponente 110 gemäß Fig. 9 wird im Folgenden nur insoweit beschrieben werden als sie sich von der Rigolenkomponente 10 gemäß Fig. 1 unterscheidet, auf deren Beschreibung hiermit ansonsten ausdrücklich verwiesen sei.

Die Rigolenkomponente 110 unterscheidet sich von der Rigolenkomponente 10 gemäß Fig. 1 lediglich dadurch, dass in dem unterhalb des Strebenelements 126 angeordneten Abschnitt 130b des Raumbereichs 130, d.h. zwischen der Basiswand 112 und dem Strebenelement 126, eine Gitterstruktur 160 vorgesehen ist, welche die Stabilität der Rigolenkomponente 110, insbesondere des Stützpfeilers 114, weiter erhöht. Ansonsten hat die Rigolenkomponente 110 die gleichen konstruktiven Merkmale wie die mit Bezug auf die vorstehend erläuterten Figuren beschriebene Rigolenkomponente 10. Insbesondere kann die Rigolenkomponente 110 in der gleichen Art und Weise raumsparend angeordnet weren, wie dies für die Rigolenkomponente 10 mit Bezug auf Fig. 2 beschrieben worden ist. Und es können unter Verwendung der Rigolenkomponente 110 die gleichen Typen von Rigoleneinheiten gebildet werden wie dies für die Rigolenkomponente 10 mit Bezug auf die Figuren 3 bis 5 beschrieben worden ist.

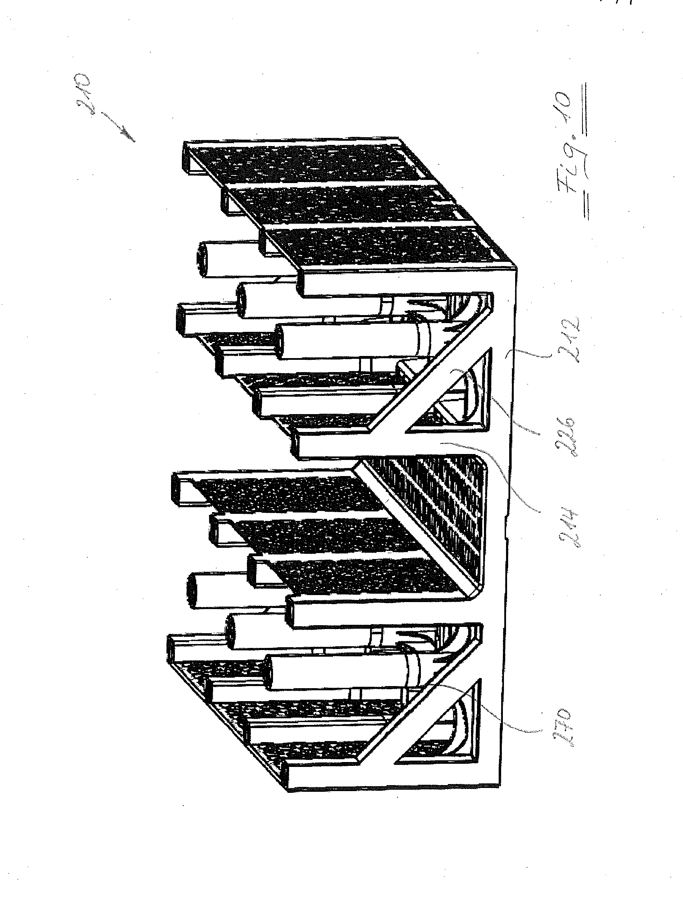

In Fig. 10 ist eine weitere Ausführungsform einer erfindungsgemäßen Rigolenkomponente dargestellt, die im Wesentlichen der Rigolenkomponente 10 gemäß Fig. 1 entspricht. Daher sind analoge Teile in Fig. 10 mit den gleichen Bezugszeichen versehen wie in Fig. 1, jedoch vermehrt um die Zahl 200. Die Rigolenkomponente 210 gemäß Fig. 10 wird im Folgenden nur insoweit beschrieben werden als sie sich von der Rigolenkomponente 10 gemäß Fig. 1 unterscheidet, auf deren Beschreibung hiermit ansonsten ausdrücklich verwiesen sei.

Die Rigolenkomponente 210 unterscheidet sich von der Rigolenkomponente 10 gemäß Fig. 1 lediglich dadurch, dass der Querschnitt der Strebenelemente 226 im Wesentlichen die gleichen Querschnittsabmessungen aufweist, wie der Stützpfeiler 214, mit dem sein eines Ende verbunden ist. Dies hat den Vorteil, dass das Strebenelement 226 sowohl Zug- als auch Druckkräfte aufnehmen kann. Aus herstellungstechnischen Gründen kann das Strebenelement 226 dabei als U-Profil ausgebildet sein, welches vorzugsweise nach außen offen ist.

Auch in dieser Ausführungsform können zusätzlich Verbindungssäulen vorhanden sein, wie man bei 270 erkennt. Zusätzlich oder alternativ kann auch diese Ausführungsform mit einer Gitterstruktur versehen sein, wie sie in Fig. 9 dargestellt ist.

## Patentansprüche

1. Raumsparende Anordnung zweier Rigolenkomponenten (10, 10'), von denen jede aufweist:
- eine wenigstens teilweise wasserdurchlässig ausgebildete Basiswand (12, 12'),
- eine Mehrzahl von Stützpfeilern (14, 14'), die von der Basiswand (12, 12') im Wesentlichen orthogonal abstehen, und
- wenigstens eine zumindest teilweise wasserdurchlässige Wandung (22), die von der Basiswand (12, 12') im Wesentlichen orthogonal absteht,
wobei zwischen zwei einander in einer vorbestimmten Richtung benachbart angeordneten Stützpfeilern (14, 14') ein Raumbereich (30, 30') vorgesehen ist, der in einem von der Basiswand (12, 12') entfernten Abschnitt eine Ausnehmung (30a, 30a') aufweist, welche sowohl von der Basiswand (12, 12') weg weisend über den gesamten Abstand (x) zwischen den beiden Stützpfeilern (14, 14') offen ist als auch zur Innenseite (36) und zur Außenseite (34) der Rigolenkomponente (10 ,10') hin offen ist,
wobei in der raumsparenden Anordnung die eine Rigolenkomponente (10') bezüglich der Orientierung der anderen Rigolenkomponente (10) invertiert angeordnet ist, und die beiden Rigolenkomponenten (10, 10') jeweils mit wenigstens einem Stützpfeiler (14, 14') oder/und wenigstens einer zumindest teilweise wasserdurchlässigen Wandung (22) in die Ausnehmung (30a', 30a) der jeweils anderen Rigolenkomponente (10', 10) eingreifen.

2. Rigolenkomponente mit den konstruktiven Rigolenkomponenten-Merkmalen nach Anspruch 1, insbesondere zur Realisierung einer raumsparenden Anrodnung nach Anspruch 1,
**dadurch gekennzeichnet, dass** sie der Basiswand (12) benachbart wenigstens ein Verbindungselement (70) aufweist, welches dazu ausgebildet ist, in der raumsparenden Anordnung mit einem Gegenelement einer identisch ausgebildeten Rigolenkomponente (10'), vorzugsweise dem Ende eines Stützpfeilers (14') dieser identisch ausgebildeten Rigolenkomponente (10') in Halteeingriff zu treten.

3. Rigolenkomponente nach Anspruch 2,
**dadurch gekennzeichnet, dass** das Verbindungselement (70) ein von der Basiswand (12) abstehendes Säulenelement ist, das an seiner von der Basiswand abgewandten Stirnfläche (70a) mit einem Verbindungsvorsprung (70b) oder einer Verbindungsöffnung ausgebildet ist.

4. Rigolenkomponente mit den konstruktiven Rigolenkomponenten-Merkmalen nach Anspruch 1 und gewünschtenfalls den Merkmalen des Kennzeichens von Anspruch 2 oder Anspruch 3, insbesondere zur Realisierung einer raumsparenden Anordnung nach Anspruch 1, **dadurch gekennzeichnet, dass** die Rigolenkomponente (10) ferner wenigstens ein Strebenelement (26) umfasst, das zwischen zwei einander in einer vorbestimmten Richtung (längs des Querrands 12b) benachbarten Stützpfeilern (14) vorgesehen ist, zur Erstreckungsrichtung der Stützpfeiler (14) zumindest abschnittsweise schräg verläuft und mit seinem einen Ende (26b) mit einem der Stützpfeiler (14) und mit seinem anderen Ende mit der Basiswand (12) oder/und dem anderen Stützpfeiler (14) verbunden ist, wobei der an das wenigstens eine Strebenelement (26) angrenzende und von der Basiswand (12) abgewandte Abschnitt (30a) des Raumbereichs (30) zwischen den beiden benachbarten Stützpfeilern (14), zwischen denen sich das Strebenelement (26) erstreckt, frei von weiteren Elementen der Rigolenkomponente (10) ist.

5. Rigolenkomponente nach Anspruch 4,
**dadurch gekennzeichnet, dass** das Strebenelement (26) ein Verstärkungselement ist.

6. Rigolenkomponente nach Anspruch 4 oder 5,
**dadurch gekennzeichnet, dass** das andere Ende des Strebenelements (26) nur mit der Basiswand (12) verbunden ist.

7. Rigolenkomponente nach Anspruch 6,
**dadurch gekennzeichnet, dass** der Abstand (d) zwischen etwa 50% und etwa 90%, vorzugsweise etwa 75%, der Ausdehnung des Stützpfeilers (14) in der vorbestimmten Richtung an dessen von der Basiswand (12) entferntem Ende (14a) beträgt.

8. Rigolenkomponente nach einem der Ansprüche 4 bis 7,
**dadurch gekennzeichnet, dass** die beiden benachbarten Stützpfeiler (14) an einem Rand (12b) der Basiswand (12) angeordnet sind.

9. Rigolenkomponente nach Anspruch 8,
**dadurch gekennzeichnet, dass** einer der beiden benachbarten Stützpfeiler (14) an einer Ecke (12d) der Basiswand (12) angeordnet ist.

10. Rigolenkomponente nach Anspruch 8 oder 9,
**dadurch gekennzeichnet, dass** an diesem Rand (12b) wenigstens ein weiteres Paar von Stützpfeilern (14) mit dazwischen angeordnetem Strebenelement (26) vorgesehen ist.

11. Rigolenkomponente nach einem der Ansprüche 8 bis 10,
**dadurch gekennzeichnet, dass** an dem diesem Rand (12b) gegenüberliegenden Rand (12b) der Basiswand (12) ebenfalls wenigstens ein Paar von Stützpfeilern (14) mit dazwischen angeordnetem Strebenelement (26) vorgesehen ist.

12. Rigolenkomponente nach einem der Ansprüche 4 bis 11,
**dadurch gekennzeichnet, dass** in dem an das Strebenelement (126) angrenzenden und der Basiswand (112) zugewandten Abschnitt (130b) des Raumbereichs (130) zwischen den beiden benachbarten Stützpfeilern (114), zwischen denen sich das Strebenelement (126) erstreckt, wenigstens ein weiteres Strebenelement oder/und eine Gitterstruktur (160) oder/und eine geschlossene Wand angeordnet ist.

13. Rigolenkomponente nach einem der Ansprüche 2 bis 12,
**dadurch gekennzeichnet, dass** sie wenigstens eine zumindest teilweise wasserdurchlässige Wandung (22, 42) umfasst, die von der Basiswand (12) im Wesentlichen orthogonal absteht und sich in einer zu dem einen Rand (12b) der Basiswand (12) im Wesentlichen orthogonal verlaufenden Richtung erstreckt.

14. Raumsparende Anordnung nach Anspruch 1, bei welcher wenigstens eine der Rigolenkomponenten nach einem der Ansprüche 2 bis 12 ausgebildet ist.
